# EUROPEAN PATENT SPECIFICATION

(11) **EP 2 401 534 B1**
(45) Date of publication and mention of the grant of the patent: **25.12.2013**
(21) Application number: 09840893.3
(22) Date of filing: 26.02.2009
(51) Int. Cl.: F16J 15/34, F04D 29/12

(54) **A MECHANICAL SEALING DEVICE**
VORRICHTUNG MIT EINER MECHANISCHEN DICHTUNG
DISPOSITIF MÉCANIQUE D'ÉTANCHÉITÉ

(43) Date of publication of application: 04.01.2012
(73) Proprietor: Roplan International AB, 147 39 Tumba (SE)
(72) Inventor: MEHMEDOVIC, Rifet, S-147 51 Tumba (SE); NEDLICH, Henrik, S-172 37 Sundbyberg (SE)
(74) Representative: Berglund, Stefan
(86) International application number: PCT/SE2009/050213
(87) International publication number: WO 2010/098704

(56) References cited:
- EP-A1- 0 809 053
- WO-A1-2008/136757
- WO-A2-2006/089289
- US-A- 3 617 155
- US-A1- 2007 108 705

## Description

### BACKGROUND OF THE INVENTION AND PRIOR ART

The present invention concerns a device comprising a mechanical seal configured to seal a gap in an opening extending through a stationary housing having a first side facing a first space, adapted to contain a process medium, and having a second side facing a second space, wherein a shaft extends through the opening to form the gap around the shaft between the shaft and the housing, the mechanical seal comprising a first seal member comprising a first seal element and a first backing-up element adapted to hold the first seal element, the first backing-up element forming an outer peripheral surface, and a second seal member comprising a second seal element and a second backing-up element adapted to hold the second seal element, wherein the second seal member is configured to be mounted on the shaft extending through the opening, and at least one force-generating member contributing in urging one of the first and the second seal members towards the other of the first and the second seal members, and securing means configured to permit an introduction of the first seal member into the opening of the housing and configured to secure the first seal member at a mounted position in the opening, wherein the two seal members are rotary in relation to each other with respect to a rotation axis so that a seal surface of one of the seal members abuts a seal surface of the other seal member in radial plane with respect to the rotation axis. Such a device is disclosed in the EP 0809053A.

A mechanical sealing device is a type of seal that is utilized to prevent leakage in rotating equipment, such as pumps, mixers, stirrers or ship propellers. When a pump operates, liquid could leak out of the pump between the rotating shaft and the stationary housing. The mechanical sealing device usually comprises the combination of a rotatable seal member connected to a shaft for rotation therewith and a stationary seal member connected to a housing. The seal members have plane radial seal faces wherein one of the seal faces abuts the other seal face. There is usually a film of fluid between the seal faces to provide lubrication thereof. In many mechanical sealing devices one or more springs contribute in urging one of the seal members toward the other.

The stationary seal member of the mechanical sealing device may be connected to the housing via a peripheral thread provided radially outside the shaft, as disclosed in for example SE 531210, i.e. the stationary seal member is screwed into the housing. The peripheral thread prevents significant movements of the stationary seal member in an axial direction with respect to the rotation axis. However, during operation, possible stresses in the housing can in certain circumstances be transferred to the radial seal faces of the stationary seal member and the rotatable seal member, respectively, via the thread. Thus, non planar states can be created and consequently leakage in the mechanical seal.

Another way of connecting the stationary seal member to the housing is for example disclosed in SE 359639. SE 359639 refers to a pressure regulating valve for an oil pump. The stationary seal member abuts an annular shoulder of the housing and is prevented from significant axial movement by means of a locking ring which is mounted to the housing axially outside the stationary seal member. The stationary seal member is thereby prevented from being withdrawn from the housing.

### SUMMARY OF THE INVENTION

The object of the present invention is to provide an alternative mechanical sealing device. Furthermore, the object is to provide an alternative mechanical sealing device providing an industrially efficient connection of the stationary seal member to the housing.

This object is achieved with the initially defined mechanical sealing device, which is characterised in that the securing means comprises a recess, provided on the outer peripheral surface of the first backing-up element, and a locking element configured to be mounted in the recess, the securing means being adapted to prevent the first seal member from being withdrawn from the opening, thereby securing the first seal member to the housing.

The above described securing means involves a number of advantages. For example, the housing and the stationary seal member of the present invention do not need to be threaded. The stationary seal member is not screwed into the housing, but secured to the housing by the securing means. Thereby, it is possible to design a housing of less depth than a threaded housing. Moreover, the mounting of the stationary seal member to the housing is a simple procedure, the procedure being advantageous in an industrial aspect. Since the locking element of the securing means is provided on the side of the housing that is not facing the process medium, residues of the process medium can not be accumulated on the locking element or in the recess. Accordingly, the securing means is also advantageous in a hygienic aspect so that the mechanical sealing device of the invention might be used in food industry such as milk processing or in medical processes. Moreover, the locking element of the present invention is mounted to the stationary seal element and not to the housing as disclosed in for example SE 531210.

According to an embodiment of the invention, the securing means further comprises a flange extending from the outer peripheral surface and an elastomer based element.

According to an embodiment of the invention, the securing means further comprises a first shoulder provided on the housing inside the first side, the elastomer based element being adapted to abut the flange and the first shoulder in the mounted position. The elastomer based element further secures the first seal member to the housing by at least partly preventing axial movements of the first seal member in the opening of the housing. In addition, the elastomer based element prevents the first seal member to turn inside the opening with respect to the rotation axis.

According to an embodiment of the invention, the securing means further comprises an inner shoulder extending from the outer peripheral surface, the inner shoulder being located in the proximity of a second shoulder provided on the housing inside the first side in the mounted position.

According to an embodiment of the invention, the inner shoulder and the second shoulder of the housing are adapted to define a final position of the first seal member in the opening when the inner shoulder abuts the second shoulder of the housing. Mechanical sealing devices are often exposed to vibrations, in particular in an axial direction. Due to these vibrations and/or a pressure difference between the first space and the second space, the first seal member may during operation be further introduced into the opening of the housing with respect to the mounted position. However, when the inner shoulder of the first seal member abuts the second shoulder of the housing, the final position of the first seal member in the opening is defined, i.e. the first seal member can not be introduced further into the opening than the final position.

According to an embodiment of the invention, the elastomer based element is configured to provide a seal between the first seal element and the housing.

According to an embodiment of the invention, the elastomer based element comprises an O-ring.

According to an embodiment of the invention, the recess is formed by a circumferential slot through the outer peripheral surface.

According to an embodiment of the invention, the locking element comprises a locking ring, the locking ring being configured to snap into the circumferential slot when the first seal member is in the mounted position. The locking ring is advantageous since it easily can snap into the circumferential slot, thereby facilitating the mounting process of the mechanical sealing device.

According to an embodiment of the invention, the locking ring is elastic.

According to an embodiment of the invention, the circumferential slot is provided on an inner portion of the first seal member, the inner portion being adapted to extend further into the second space than the second side of the housing in the mounted position.

According to an embodiment of the invention, the stationary housing is a part of the device.

According to an embodiment of the invention, the shaft is a part of the device.

According to an embodiment of the invention, the device forms a pump and wherein the shaft carries an impeller provided in the first space. For example, the pump may be a centrifugal pump. Alternatively, the device may form a stirring device.

### SHORT DESCRIPTION OF THE DRAWINGS

The invention is now to be explained through a description of various embodiments and with reference to the drawings attached hereto.
FIG. 1 shows a sectional view through a mechanical sealing device according to a first embodiment of the invention.
FIG. 2 shows a sectional view through a mechanical sealing device according to a second embodiment of the invention.
FIG. 3 shows a plan view of a locking element of a securing means of the mechanical sealing device.

### DESCRIPTION OF EMBODIMENTS

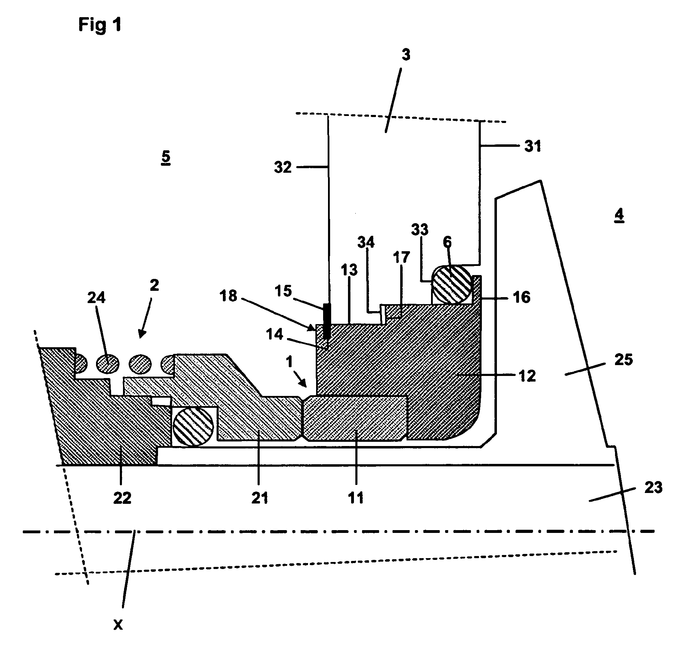

A first embodiment of a mechanical sealing device, which can be comprised by the device according to the invention, will now be described with reference to FIG. 1. The mechanical sealing device is configured to seal an annular gap in an opening extending through a stationary housing 3. The stationary housing 3 has a first side 31 and a second side 32. The first side 31 faces a first space 4. The first space 4 contains a process medium. The second side 32 of the stationary housing 3 faces a second space 5. A shaft 23 extends through the opening to form the gap around the shaft 23. The gap is thus located between the shaft 23 and the housing 3. The shaft 4 may be an impeller shaft of a pump, wherein the housing 3 is a part of the pump, e.g. the so called back plate of the pump.

The mechanical sealing device comprises a first seal member 1 and a second seal member 2. Both seal members 1,2 are annular and have radial seal surfaces. When the mechanical sealing device is in a mounted position, the first seal member 1 is connected to the housing 3. The second seal member 2 is connected to the shaft 23. The two seal members 1,2 are rotary in relation to each other around a rotation axis x. It should be noted that the expressions radial direction or radially and axial direction or axially in the present application always refer to the rotation axis x.

In the first embodiment, the first seal member 1 is substantially stationary and the second seal member 2 is rotatable. However, it should be noted that the second seal member 2 could be substantially stationary and the first seal member 1 could be rotatable. It is also possible that both seal members 1,2 are rotating, but at different speeds.

The first seal member 1 comprises an annular first seal element 11 and an annular first backing-up element 12. The first backing-up element 12 holds the first seal element 11. The first seal member 1 is connected to the housing 3 via the first backing-up element 12.

The first backing-up element 12 forms an outer peripheral surface 13. In the mounted position, the outer peripheral surface 13 extends in an axial direction and faces the housing 3. Furthermore, the first seal member 1 has an inner portion 18. In the mounted position, the inner portion 18 extends further into the second space 5 than the second side 32 of the housing 3.

The second seal member 2 comprises an annular second seal element 21 and an annular second backing-up element 22. The second backing-up element 22 holds the second seal element 21. In the mounted position, the second seal member 2 is mounted to the shaft 23 via the second backing-up element 22.

A seal surface of the first seal member 1 abuts a seal surface of the second seal member 2. The seal surfaces are plane, or substantially plane. During use of the mechanical sealing device, there is a film of fluid between the seal surfaces to provide lubrication thereof. The lubrication prevents the seal surfaces from being worn out. A force-generating member 24 contributes in urging the second seal member 2 towards the first seal member 1. By urging the second seal member 2 against the first seal member 1, the mechanical seal is made tight. The second seal element 2 thus has a seal surface abutting the seal surface of the first seal element 1. It is also possible that the force-generating member 24 acts on the first seal member 1. As a further possibility, two force-generating members 24 may act on a respective one of the first and the second seal members 1,2 simultaneously.

Furthermore, the mechanical sealing device comprises securing means. The securing means are configured to permit an introduction of the first seal member 1 into the housing 3. The securing means comprises a recess 14. The recess 14 is provided on the outer peripheral surface 13 of the first backing-up element 12. Preferably, the recess 14 is provided on the inner portion 18 of the first seal member 1. Advantageously, the recess 14 is formed by a circumferential slot in the inner portion 18 through the outer peripheral surface 13. The slot surrounds the annular first backing-up element 12.

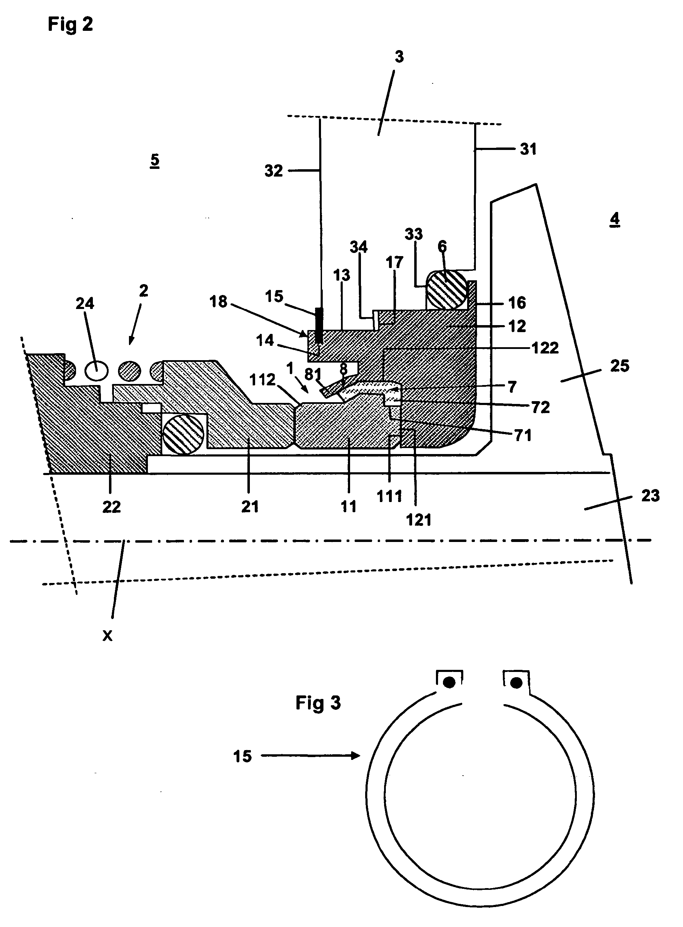

Furthermore, the securing means comprises a locking element 15. The locking element 15 is configured to be mounted in the recess 14. The locking element 15 can comprise an annular locking ring, see FIG. 3. The locking ring can be elastic and is configured to be snapped into the recess 14, or into the circumferential slot, when the first seal member 1 is in the mounted position. The locking ring, disclosed in FIG. 3, is not closed, presenting an opening permitting elastic expansion of the elastic locking ring before introduction into the slot. Furthermore, the locking ring is configured to extend in a radial direction. The locking ring extends from the recess 14 to cover a part of the second side 32 of the housing 3.

The securing means also comprises an annular flange 16. The flange 16 extends from the outer peripheral surface 13 in a radial direction. Preferably, the flange 16 is provided at an end of the first backing-up element 12. The end faces the first space 4. The outer side of the flange 16 extends in a radial plane. The radial plane of the flange 16 is substantially the same as the radial plane of the first side 31 of the housing 3. Moreover, the securing means comprises an annular first shoulder 33 and an annular second shoulder 34 provided on the housing 3. The first shoulder 33 extends in a radial direction and is provided axially inside the first side 31 of the housing 3 and axially inside the flange 16. The second shoulder 34 extends in a radial direction and is provided axially inside the first shoulder 33. In addition, the securing means comprises an annular inner shoulder 17 provided on the first seal member 1. The inner shoulder 17 extends in a radial direction from the outer peripheral surface 13. The inner shoulder 17 is provided axially inside the flange 16 and the first shoulder 33, and axially outside the second shoulder 34.

Preferably, the securing means also comprises an elastomer based element 6. The elastomer based element 6 abuts the flange 16 and the first shoulder 33 in the mounted position. The elastomer based element 6 can for example be an O-ring. The elastomer based element 6 may be manufactured in any suitable elastic polymer material, thermoplastic material, synthetic rubber or natural rubber.

When mounting the mechanical sealing device, the first seal member 1 is introduced into the housing 3 from the first side 4. The elastomer based element 6 is preferably arranged in the housing 3 before the first seal element 1 is introduced into the housing 3. When the first seal member 1 is fully introduced into the housing 3, the locking element 15 is snapped into the recess 14. The locking element 15 and the additional securing means secure the first seal member 1 in the opening of the housing 3. Thereby, the securing means prevents the first seal member 1 from being withdrawn from the opening. The first seal member 1 is now in the mounted position inside the opening of the housing 3. In the mounted position, the elastomer based element 6 abuts the first shoulder 33 of the housing and the flange 16 of the first seal member 1. The elastomer based element 6 provides a seal between the first seal element 1 and the housing 3. Furthermore, the second shoulder 34 of the housing 3 is located in the proximity of the inner shoulder 17 of the first seal member 1. Preferably, the second shoulder 34 does not abut the inner shoulder 17 in the mounted position.

During operation, vibrations may occur in the mechanical seal. Furthermore, the mechanical seal may be exposed to high pressure. The vibrations or the high pressure may lead to a further introduction or displacement of the first seal member 1 into the housing 3. If the first seal member 1 is introduced so that the second shoulder 34 of the housing 3 abuts the inner shoulder 17 of the first seal member 1, a final position is defined for the introduction of the first seal member 1 into the opening of the housing 3. Accordingly, the securing means not only prevents the first seal member 1 from being withdrawn from the housing 3, but the securing means also prevents the first seal member 1 to be introduced further into the housing 3 than what is desired. The possible further introduction of the first seal member 1 into the housing 3 is facilitated by the elasticity of the elastomer based element 6. However, the elastomer based element 6 is also advantageous in preventing movements in an axial direction. Furthermore, the elastomer based element 6 may prevent the first seal member 1 from rotating inside the opening.

The first seal element 11 and the second seal element 21 are preferably manufactured in a material selected from the group comprising a metallic material, a ceramic material, a carbide material, a carbon-graphite material and a nitride material. The first backing-up element 12 is preferably manufactured in a rigid, non-elastic material, for instance a metallic material.

A second embodiment of a mechanical sealing device, which can be comprised by the device according to the invention, will now be described with reference to FIG. 2. The mechanical sealing device of FIG. 2 is similar to the one in FIG. 1, with the difference that a stress absorbing element 7 is arranged between the first backing-up element 12 and the first seal element 11. The first backing-up element 12 and the first seal element 11 are therefore of slightly different designs than the corresponding elements of FIG. 1. The slightly different designs are described below.

The first seal element 11 forms a backing surface 111 and an outer surface 112. The first backing-up element 12 has a support surface 121 and an inner surface 122.

As can be seen in FIG. 2, the backing surface 111 of the first seal element 11 abuts the support surface 121 of the first backing-up element 12. Preferably, the surfaces 112 and 121 are planar, or substantially planar, and configured such that a tight abutment is achieved, i.e. the surfaces 112 and 121 abut each other tightly or sealingly.

As mentioned above, the stress absorbing element 7 is arranged between the first backing-up element 12 and the first seal element 11. Preferably, the stress absorbing element 7 is provided between the outer surface 112 of the first seal element 11 and the inner surface 122 of the first backing-up element 12. The first seal element 11 comprises a surrounding groove 71, which extends radially inwards from the outer surface 112 and which is disposed at a corner formed between the backing surface 111 and the outer surface 112. The stress absorbing element 7 comprises an annular flange 72, which is complementary to the surrounding groove 71 and extends radially inwards into the groove 71. The stress absorbing element 7 will thus abut the support surface 121 and the inner surface 122 of the first backing-up element 12. Thanks to the groove 71 and the annular flange 72, the stress absorbing element 7 will be secured in the surrounding annular space formed between the outer surface 112 of the first seal element 11 and the inner surface 122 of the first backing-up element 12.

In addition, the first backing-up element 12 may comprise a securing element 8 adapted to secure the stress absorbing element 7 between the outer surface 112 and the inner surface 122. The securing element 8 may comprise a locking flange 81 projecting axially from the inner surface 122. When the first seal element 11 and the stress absorbing element 7 are mounted in the first backing-up element 12, the locking flange 81 is somewhat bent towards the outer surface 112 of the first seal element 11. This bending of the locking flange 81 further secures the stress absorbing element 7 in the annular space between the outer surface 112 and the inner surface 122.

The stress absorbing element 7 permits the first seal element 11 to perform slight movements along a radial plane, so that any possible transfer of stresses from the connection of the first backing-up element 12 to any component, for instance the housing 3, may be reduced or prevented.

The stress absorbing element 7 may be manufactured in any suitable elastic polymer material, thermoplastic material, synthetic rubber or natural rubber.

The mechanical sealing device according to the invention may be used in various propellers in for example ships or boats or in the process of papermaking. The mechanical sealing device may also be used for various pumps.

## Claims

1. A device comprising a mechanical seal configured to seal a gap in an opening extending through a stationary housing (3) having a first side (31) facing a first space (4), adapted to contain a process medium, and having a second side (32) facing a second space (5), wherein a shaft (23) extends through the opening to form the gap around the shaft (23) between the shaft (23) and the housing (3), the mechanical seal comprising,
a first seal member (1) comprising a first seal element (11) and a first backing-up element (12) adapted to hold the first seal element (11), the first backing-up element (12) forming an outer peripheral surface (13), and
a second seal member (2) comprising a second seal element (21) and a second backing-up element (22) adapted to hold the second seal element (21), wherein the second seal member (2) is configured to be mounted on the shaft (23) extending through the opening, and
at least one force-generating member (24) contributing in urging one of the first and the second seal members (1,2) towards the other of the first and the second seal members (1,2), and
securing means configured to permit an introduction of the first seal member (1) into the opening of the housing (3) and configured to secure the first seal member (1) at a mounted position in the opening,
wherein the two seal members (1,2) are rotary in relation to each other with respect to a rotation axis (x) so that a seal surface of one of the seal members (1) abuts a seal surface of the other seal member (2) in a radial plane with respect to the rotation axis (x),
**characterised in that** the securing means comprises a recess (14), provided on the outer peripheral surface (13) of the first backing-up element (12), and a locking element (15) configured to be mounted in the recess (14), the securing means being adapted to prevent the first seal member (1) from being withdrawn from the opening, thereby securing the first seal member (1) to the housing (3).

2. A device according to claim 1, **wherein** the securing means further comprises a flange (16) extending from the outer peripheral surface (13) and an elastomer based element (6).

3. A device according to claim 2, **wherein** the securing means further comprises a first shoulder (33) provided on the housing (3) inside the first side (31), the elastomer based element (6) being adapted to abut the flange (16) and the first shoulder (33) in the mounted position.

4. A device according to claim 2 or 3, **wherein** the securing means further comprises an inner shoulder (17) extending from the outer peripheral surface (13), the inner shoulder (17) being located in the proximity of a second shoulder (34) provided on the housing (3) inside the first side (31) in the mounted position.

5. A device according to claim 4, **wherein** the inner shoulder (17) and the second shoulder (34) of the housing (3) are adapted to define a final position of the first seal member (1) in the opening when the inner shoulder (17) abuts the second shoulder (34) of the housing (3).

6. A device according to any one of claims 2-5, **wherein** the elastomer based element (6) is configured to provide a seal between the first seal element (1) and the housing (3).

7. A device according to any one of claims 2-6, **wherein** the elastomer based element (6) comprises an O-ring.

8. A device according to any one of the preceding claims, wherein the recess (14) is formed by a circumferential slot through the outer peripheral surface (13).

9. A device according to claim 8, **wherein** the locking element (15) comprises a locking ring, the locking ring being configured to snap into the circumferential slot when the first seal member (1) is in the mounted position.

10. A device according to claim 9, **wherein** the locking ring is elastic.

11. A device according to any one of claims 8-10, **wherein** the circumferential slot is provided on an inner portion (18) of the first seal member (1), the inner portion (18) being adapted to extend further into the second space (5) than the second side (32) of the housing (3) in the mounted position.

12. A device according to any one of the preceding claims, wherein the stationary housing (3) is a part of the device.

13. A device according to claim 12, **wherein** the shaft (23) is a part of the device.

14. A device according to claim 13, **wherein** the device forms a pump and wherein the shaft (23) carries an impeller (25) provided in the first space (4).

## Patentansprüche

1. Vorrichtung mit einer mechanischen Dichtung zum Abdichten eines Spaltes in einer Öffnung, die sich durch ein stationäres Gehäuse (3) erstreckt, das eine erste Seite (31) besitzt, die einem ersten Raum (4) zugewandt ist, und das geeignet ist, ein Prozessmedium aufzunehmen, und das eine zweite Seite (32) besitzt, die einem zweiten Raum (5) zugewandt ist, worin sich ein Schaft (23) durch die Öffnung erstreckt und einen Spalt um den Schaft (23) zwischen dem Schaft (23) und dem Gehäuse (3) bildet, wobei die mechanische Dichtung besteht aus:
einem ersten Dichtungsglied (1), bestehend aus einem ersten Dichtungselement (11) und einem ersten Verstärkungselement (12), das geeignet ist, das erste Dichtungselement (11) zu stützen, wobei das Verstärkungselement (12) eine äußere periphere Oberfläche (13) bildet, und
einem zweiten Dichtungsglied (2), bestehend aus einem zweiten Dichtungselement (21) und einem zweiten Verstärkungselement (22), das geeignet ist, das zweite Dichtungselement (21) zu stützen, wobei das zweite Dichtungsglied (2) zur Montage auf dem Schaft (23) ausgestaltet ist, der sich durch die Öffnung erstreckt, und
wenigstens einem krafterzeugenden Glied (24), das dazu beiträgt, eines des ersten und zweiten Dichtungsgliedes (1, 2) in Richtung des anderen ersten und zweiten Dichtungsgliedes zu treiben, und
ein Sicherungsmittel, das ausgebildet ist, um ein Einführen des ersten Dichtungsgliedes (1) in die Öffnung des Gehäuses (3) zu erlauben und um das erste Dichtungsglied (1) in einer montierten Position in der Öffnung zu sichern,
wobei die zwei Dichtungsglieder (1, 2) gegeneinander drehbar und drehbar in Bezug auf eine Rotationsachse (x) sind, so dass eine Dichtungsoberfläche eines der Dichtungsglieder (1) an der Dichtungsoberfläche des anderen Dichtungsgliedes (2) in radialer Ebene in Bezug zur Rotationsachse (x) anliegt,
**dadurch gekennzeichnet, dass**
das Sicherungsmittel eine Ausnehmung (14), die auf der äußeren peripheren Oberfläche (13) des ersten Verstärkungselementes (12) angeordnet ist, und ein Verrieglungselement (15) besitzt, das ausgebildet ist, um in die Ausnehmung (14) einzugreifen, wobei das Sicherungsmittel ausgebildet ist, um zu verhindern, dass das erste Dichtungsglied (1) aus der Öffnung herausgezogen wird, wodurch das erste Dichtungsglied (1) im Gehäuse (3) gesichert wird.

2. Vorrichtung nach Anspruch 1, in der das Sicherungsmittel zusätzlich einen Flansch (16) besitzt, der sich von der äußeren peripheren Oberfläche (13) erstreckt, und ein auf einem Elastomer basierendes Element (6) besitzt.

3. Vorrichtung nach Anspruch 2, in der das Sicherungsmittel ferner eine erste Schulter (33) aufweist, die auf dem Gehäuse (3) innerhalb der ersten Seite (31) vorgesehen ist, wobei das auf einem Elastomer basierende Element (6) ausgestaltet ist, um an den Flansch (16) und der ersten Schulter (33) in der montierten Position anzuliegen.

4. Vorrichtung nach Anspruch 2 oder 3, in der das Sicherungsmittel zusätzlich eine innere Schulter (17) besitzt, die sich von der äußeren peripheren Oberfläche (13) erstreckt, wobei die innere Schulter (17) in der Nähe der zweiten Schulter (34) angeordnet ist, die auf dem Gehäuse (3) innerhalb der ersten Seite (31) in der montierten Position vorgesehen ist.

5. Vorrichtung nach Anspruch 4, in der die innere Schulter (17) und die zweite Schulter (34) des Gehäuses ausgebildet sind, um eine Endposition des ersten Dichtungsgliedes (1) in der Öffnung zu definieren, wenn die innere Schulter (17) an der zweiten Schulter (34) des Gehäuses anliegt.

6. Vorrichtung nach einem der Ansprüche 2 bis 5, in der das auf einen Elastomer basierende Element (6) ausgebildet ist um eine Dichtung zwischen dem ersten Dichtungselement (1) dem Gehäuse (3) zu bilden.

7. Vorrichtung nach einem der Ansprüche 2 bis 6, in der das auf einen Elastomer basierende Element (6) einen O-ring enthält.

8. Vorrichtung nach einem der vorhergehenden Ansprüche, in der die Ausnehmung (14) durch eine umlaufende Nut durch die äußere periphere Oberfläche (13) gebildet ist.

9. Vorrichtung nach Anspruch 8, in der das Verriegelungselement (15) einen Verriegelungsring enthält, der ausgebildet ist, um in die umlaufende Nut einzurasten, wenn das erste Dichtungsglied (1) in der montierten Position liegt.

10. Vorrichtung nach Anspruch 9, in der der Verriegelungsring elastisch ist.

11. Vorrichtung nach einem der Ansprüche 8 bis 10, in der die umlaufende Nut auf einem inneren Teil (18) des ersten Dichtungsgliedes (1) vorgesehen ist, wobei das innere Teil (18) angepasst ist, um zusätzlich in den zweiten Raum (5) als zweite Seite (32) des Gehäuses (3) in der montierten Position hineinzuragen.

12. Vorrichtung nach einem der vorhergehenden Ansprüche, in der das stationäre Gehäuse (3) Teil der Vorrichtung ist.

13. Vorrichtung nach Anspruch 12, in der der Schaft (23) ein Teil der Vorrichtung ist.

14. Vorrichtung nach Anspruch 13, in der die Vorrichtung eine Pumpe bildet und worin der Schaft (23) ein Flügelrad (25) trägt, das in dem ersten Raum (4) vorgesehen ist.

## Revendications

1. Dispositif comprenant un joint d'étanchéité mécanique configuré pour réaliser l'étanchéité d'un espace dans une ouverture s'étendant à travers un boîtier fixe (3) ayant un premier côté (31) faisant face à un premier espace (4), adapté pour contenir un milieu de traitement, et ayant un second côté (32) faisant face à un second espace (5), dans lequel un arbre (23) s'étend à travers l'ouverture afin de former l'espace autour de l'arbre (23) entre l'arbre (23) et le boîtier (3), le joint d'étanchéité mécanique comprenant :
un premier organe formant joint d'étanchéité (1) comprenant un premier élément de joint d'étanchéité (11) et un premier élément de garnissage (12) adapté pour maintenir le premier élément de joint d'étanchéité (11), le premier élément de garnissage (12) formant une surface périphérique externe (13), et
un second organe formant joint d'étanchéité (2) comprenant un second élément de joint d'étanchéité (21) et un second élément de garnissage (22) adapté pour maintenir le second élément de joint d'étanchéité (21), dans lequel le second organe formant joint d'étanchéité (2) est configuré pour être monté sur l'arbre (23) s'étendant à travers l'ouverture, et
au moins un organe de génération de force (24) contribuant à pousser l'un des premier et second organes formant joint d'étanchéité (1, 2) vers l'autre parmi les premier et second organes formant joint d'étanchéité (1, 2), et
des moyens de fixation configurés pour permettre une introduction du premier organe formant joint d'étanchéité (1) dans l'ouverture du boîtier (3) et configurés pour fixer le premier organe formant joint d'étanchéité (1) dans une position montée dans l'ouverture,
dans lequel les deux organes formant joint d'étanchéité (1, 2) sont en relation rotative entre eux par rapport à un axe de rotation (x) de sorte qu'une surface de joint d'étanchéité de l'un des organes de joint d'étanchéité (1) vient en butée contre une surface de joint d'étanchéité de l'autre l'organe formant joint d'étanchéité (2) dans un plan radial par rapport à l'axe de rotation (x),
**caractérisé en ce que** les moyens de fixation comprennent un évidement (14), prévu sur la surface périphérique externe (13) du premier élément de garnissage (12), et un élément de blocage (15) configuré pour être monté dans l'évidement (14), les moyens de fixation étant adaptés pour empêcher le retrait du premier organe formant joint d'étanchéité (1) de l'ouverture, fixant ainsi le premier organe formant joint d'étanchéité (1) sur le boîtier (3).

2. Dispositif selon la revendication 1, dans lequel les moyens de fixation comprennent en outre une bride (16) s'étendant à partir de la surface périphérique externe (13) et un élément à base d'élastomère (6).

3. Dispositif selon la revendication 2, dans lequel les moyens de fixation comprennent en outre un premier épaulement (33) prévu sur le boîtier (3) à l'intérieur du premier côté (31), l'élément à base d'élastomère (6) étant adapté pour venir en butée contre la bride (16) et le premier épaulement (33) dans la position montée.

4. Dispositif selon la revendication 2 ou 3, dans lequel les moyens de fixation comprennent en outre un épaulement interne (17) s'étendant à partir de la surface périphérique externe (13), l'épaulement interne (17) étant positionné à proximité d'un second épaulement (34) prévu sur le boîtier (3) à l'intérieur du premier côté (31) dans la position montée.

5. Dispositif selon la revendication 4, dans lequel l'épaulement interne (17) et le second épaulement (34) du boîtier (3) sont adaptés pour définir une position finale du premier organe formant joint d'étanchéité (1) dans l'ouverture, lorsque l'épaulement interne (17) vient en butée contre le second épaulement (34) du boîtier (3).

6. Dispositif selon l'une quelconque des revendications 2 à 5, dans lequel l'élément à base d'élastomère (6) est configuré pour fournir un joint d'étanchéité entre le premier élément d'étanchéité (1) et le boîtier (3).

7. Dispositif selon l'une quelconque des revendications 2 à 6, dans lequel l'élément à base d'élastomère (6) comprend un joint torique.

8. Dispositif selon l'une quelconque des revendications précédentes, dans lequel l'évidement (14) est formé par une fente circonférentielle à travers la surface périphérique externe (13).

9. Dispositif selon la revendication 8, dans lequel l'élément de blocage (15) comprend une bague de blocage, la bague de blocage étant configurée pour s'emboîter dans la fente circonférentielle lorsque le premier organe formant joint d'étanchéité (1) est dans la position montée.

10. Dispositif selon la revendication 9, dans lequel la bague de blocage est élastique.

11. Dispositif selon l'une quelconque des revendications 8 à 10, dans lequel la fente circonférentielle est prévue sur une partie interne (18) du premier organe formant joint d'étanchéité (1), la partie interne (18) étant adaptée pour s'étendre davantage dans un second espace (5) que le second côté (32) du boîtier (3) dans la positon montée.

12. Dispositif selon l'une quelconque des revendications précédentes, dans lequel le boîtier fixe (3) fait partie du dispositif.

13. Dispositif selon la revendication 12, dans lequel l'arbre (23) fait partie du dispositif.

14. Dispositif selon la revendication 13, dans lequel le dispositif forme une pompe et dans lequel l'arbre (23) porte un rotor (25) prévu dans le premier espace (4).
